# EUROPÄISCHE PATENTSCHRIFT

(11) **EP 0 584 697 B1**
(45) Veröffentlichungstag und Bekanntmachung des Hinweises auf die Patenterteilung: **07.02.1996**
(21) Anmeldenummer: 93113164.3
(22) Anmeldetag: 17.08.1993
(51) Int. Cl.: B64G 1/64, B64G 1/42, F17C 13/08

(54) **Halterung für Speicherbehälter**
Support for storage vessel
Support pour réceptacle de stockage

(30) Priorität: 17.08.1992 DE 4227189
(43) Veröffentlichungstag der Anmeldung: 02.03.1994
(73) Patentinhaber: Linde Aktiengesellschaft, D-65189 Wiesbaden (DE)
(72) Erfinder: Leiderer, Hermann, Dr. rer. nat., D-93086 Wörth/Donau (DE)
(74) Vertreter: Kasseckert, Rainer

(56) Entgegenhaltungen:
- FR-A- 2 608 725
- US-A- 3 814 361
- US-A- 4 184 609
- US-A- 4 481 778

## Beschreibung

Die Erfindung betrifft eine Vorrichtung zur Halterung eines Speicherbehälters durch Zugspannung innerhalb eines Objekts, insbesondere eines beweglichen Objekts, vorzugsweise eines Satelliten, Flugzeugs oder Kraftfahrzeugs, wobei der Speicherbehälter der Lagerung von flüssigen oder gasförmigen Fluiden, deren Temperatur mindestens eine Differenz von 10°C, insbesondere 30°C, vorzugsweise 50°C zu der Außentemperatur des Objekts aufweist, dient, wobei die Halterung ein Formteilenthält, das bei vergleichsweise hohen mechanischen Belastungen, insbesondere während des Starts des Flugzeugs bzw. Satelliten oder des Fahrbetriebs des Kraftfahrzeugs, zu einer Erhöhung und bei vergleichsweise geringen mechanischen Belastungen, insbesondere während des Flugbetriebs des Flugzeugs bzw. Satelliten oder des Standbetriebs des Kraftfahrzeugs, zu einer Verringerung der Zugspannung führt.

Unter den flüssigen oder gasförmigen Fluiden gewinnen z.B. Helium oder Wasserstoff bei technischen Anwendungen zunehmend an Bedeutung. Speziell Wasserstoff wird in den nächsten Jahren bzw. Jahrzehnten als einer der Hauptenergieträger Verwendung finden. Bereits seit einigen Jahren existieren wasserstoffbetriebene Kraftfahrzeuge im Versuchsstadium. In den kommenden Jahren sollen erste Großraumexperimentalflugzeuge mit Wasserstoff betrieben werden.

In der Raumfahrttechnik, speziell bei bestimmten Arten von Satelliten ist die "Mitnahme" von Helium in den Orbit unabdingbar für das Funktionieren von Meßeinrichtungen, Sendern, Empfängern, etc..

Darüber hinaus gibt es Anwendungsfälle, bei denen die Temperatur der in dem Speicherbehälter gelagerten flüssigen oder gasförmigen Fluide höher als die Außentemperatur des Objekts ist. In diesen Fällen kann die Verhinderung eines Kälteeintrags in den Speicherbehälter wünschenswert sein.

Die für die obengenannten Anwendungen, die nur eine unvollständige Aufzählung darstellen können, notwendigen Speicherbehälter müssen so konstruiert bzw. gebaut werden, daß die Verdampfungsverluste der flüssigen oder gasförmigen Fluide möglichst gering gehalten werden können. Dies kann jedoch nur dann erreicht werden, wenn ein Wärmeeintrag in das Innere des Speicherbehälters vermieden wird. Die größten Wärmeeinträge treten meist über die Befestigungsvorrichtungen der Speicherbehälter auf. Insbesondere bei Speicherbehältern in Satelliten müssen die Wärmeeinträge so gering als möglich gehalten werden, da in der Regel ein Nachfüllen des Speicherbehälters nicht möglich ist. Die Befestigungsvorrichtungen der Speicherbehälter sollten demzufolge so ausgelegt sein, daß der Wärmeeintrag minimal wird.

Dieser Forderung steht allerdings die Tatsache gegenüber, daß gerade Speicherbehälter für gasförmige oder flüssige Fluide in Flugzeugen oder Satelliten während bestimmter Zeiträume, wie z.B. dem Start- oder Beschleunigungsvorgang, größeren Belastungen standhalten müssen. Aus diesem Grund ist eine mechanisch stark belastbare Verbindung zwischen dem Speicherbehälter und dem Objekt notwendig.

Im Gegensatz zu den hohen Belastungen wie sie z.B. während des Startvorganges von Flugzeugen und Satelliten auftreten, sind die mechanischen Belastungen während der Flugphase als eher gering zu betrachten. Für diesen Zeitraum ist also die für den Startvorgang benötigte Halterung überdimensioniert.

Aus der US-PS 3 814 361 ist eine Vorrichtung zur Halterung eines Speicherbehälters innerhalb eines Objektes bekannt, wobei es sich bei diesem Objekt auch z.B. um einen Satelliten handeln kann. Der Speicherbehälter innerhalb dieses Objekts dient der Lagerung von flüssigen oder gasförmigen Fluiden, deren Temperatur mindestens eine Differenz von 10°C zu der Außentemperatur des Objekts aufweist. Die Halterung des innerhalb des Objekts angeordneten Speicherbehälters enthält hierbei ein Teil, das bei vergleichsweise hohen mechanischen Belastungen zu einer Erhöhung und bei vergleichsweise geringen mechanischen Belastungen zu einer Verringerung der Halterungsspannung führt.

Ziel und Aufgabe der vorliegenden Erfindung ist es, eine Vorrichtung zur Halterung eines Speicherbehälters durch Zugspannung innerhalb eines Objekts anzugeben, die bei vergleichsweise hohen mechanischen Belastungen, insbesondere während des Fahrbetriebes des Kraftfahrzeugs oder Starts des Flugzeugs bzw. Satelliten, eine stabile Verbindung zwischen dem Speicherbehälter und dem Objekt gewährleistet und bei vergleichsweise geringen mechanischen Belastungen, insbesondere während des Standbetriebes des Kraftfahrzeugs, der Flugphase des Flugzeugs bzw. des Satelliten, eine mechanisch nur gering belastbare und schlecht wärmeleitende Halterung zwischen dem Speicherbehälter und dem Objekt gewährleistet.

Dies wird erfindungsgemäß dadurch erreicht, daß das Formteil aus einer Formgedächtnislegierung (Memory-Metall) besteht.

Formgedächtnislegierungen besitzen die Eigenschaft, daß sie Formen, die sie unterhalb einer bestimmten Temperatur, der sogenannten Schalttemperatur, "aufgezwungen" bekommen, bei Überschreiten der Schalttemperatur wieder verlieren, sprich ihre ursprüngliche Form wieder annehmen. Dieser Effekt ist das Ergebnis einer thermoelastischen, martensitischen Umwandlung,
wobei die Umwandlungstemperatur im Bereich von -100°C und 100°C eingestellt werden kann. Der Formgedächtniseffekt tritt in mehreren Legierungssystemen auf; jedoch stellen Nickel-Titan-Legierungen die heute technisch bedeutsamsten Formgedächtnislegierungen dar.

Mittels der erfindungsgemäßen Vorrichtung zur Halterung eines Speicherbehälters verringert sich der Wärmeeintrag über die Befestigungsvorrichtungen in den Speicherbehälters während der Phasen, in denen das Objekt keiner hohen mechanischen Belastung ausgesetzt ist. Dies bedeutet, daß z.B. im Falle eines Satelliten der Verbrauch an Kühlmittel drastisch verringert und somit die Lebensdauer bzw. Nutzungszeit der in bzw. auf dem Satelliten befindlichen Meßeinrichtungen entsprechend verlängert werden kann.

Nach wie vor sind die Befestigungsvorrichtungen des Speicherbehälters jedoch so ausgelegt, daß sie den auftretenden mechanischen Belastungen standhalten können.

Mittels der Verwendung eines Formteils aus einer Formgedächtnislegierung kann das "Umschalten" zwischen dem mechanisch stärker und dem mechanisch weniger stark belastbaren Zustand ohne den Einsatz von aktiven Bauteilen, wie z.B. Stellmotoren, erfolgen. Dadurch können gerade bei Satelliten mögliche Fehlerquellen ausgeschlossen werden.

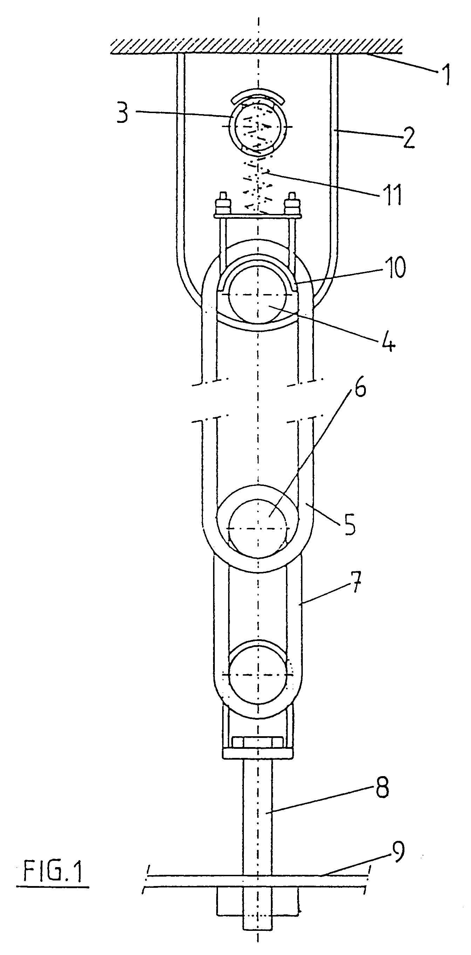

Die Erfindung sowie weitere Einzelheiten der Erfindung seien anhand der Figuren 1 bis 3 dargestellt. Hierbei besitzen identische Bauteile gleiche Bezugszeichen.

**Figur 1** zeigt in Seitenansicht eine Vorrichtung zur Halterung eines Speicherbehälters (1) in einem Satelliten, wobei die Halterung im mechanisch weniger stark belasteten Zustand dargestellt ist. Die Vorrichtung besteht aus zwei voneinander beabstandeten, am Speicherbehälter (1) befestigten Laschen (2), die zur Aufnahme eines speicherbehälternahen Rohres (3) und eines speicherbehälterfernen Rohres (4) ausgebildet sind. Das speicherbehälterferne Rohr (4) steht mit einer Öse (5), bei der es sich um ein Band aus Metall oder einem anderen äquivalenten Material dazu handelt, in Eingriff, die mit mindestens einem weiteren Rohr (6) und einer weiteren Öse (7), sowie einem Befestigungsteil (8) aus einer Formgedächtnislegierung (Memory-Metall) mit dem Objekt (9), bei dem es sich in diesem Falle um den Satelliten handelt, verbunden ist. Zwischen der mit dem speicherbehälterfernen Rohr (4) in Eingriff stehenden Öse (5) und dem Rohr (4) ist eine Kappe (10) angeordnet, die über ein elastisches Element (11) mit dem speicherbehälternahen Rohr (3) verbunden ist. In der vorliegenden Darstellung ist das elastische Element (11) eine Spiralfeder. Es versteht sich von selbst, daß anstelle der Rohre (3, 4) auch Bolzen verwendet werden könnten, jedoch würde dies, bei gleichem Material der Rohre bzw. Bolzen, eine höhere Wärmeleitfähigkeit bedeuten.

Während der Start- bzw. Beschleunigungsphase ist die Länge des Befestigungsteils (8) aus der Formgedächtnislegierung so gewählt, daß die Kappe (10) auf dem speicherbehälterfernen Rohr (4) aufliegt (in der Figur nicht dargestellt). Die auftretenden Kräfte werden also über das System Laschen (2) - speicherbehälterfernes Rohr (4) - Öse (5) - Rohr (6) - Öse (7) - Befestigungsteil (8) - Objekt (9) aufgefangen. Aufgrund der relativ großen Auflageflächen zwischen den einzelnen Bauteilen kommt es zu einem hohen Wärmeeintrag in den Speicherbehälter (1).

Nach Beendigung der Start- bzw. Beschleunigungsphase, also in etwa dann, wenn der Satellit die vorbestimmte Umlaufbahn erreicht, sinkt die Umgebungstemperatur auf etwa 200°K. Die Schalttemperatur für die Formgedächtnislegierung muß nun zwischen dieser und der vor dem Start- bzw. Beschleunigungsphase liegenden gewählt werden. Bei dem Unterschreiten der Schalttemperatur geht das Befestigungsteils (8) aus der Formgedächtnislegierung in seinen ursprünglichen Zustand über. Dies bedeutet im vorliegenden Falle, daß es eine Längenänderung durchläuft und dadurch die Kappe (10) von dem speicherbehälterfernen Bolzen (4) abhebt (in der Figur dargestellt). Der Wärmefluß wird nun auf die Spiralfeder (11) umgeleitet, wodurch zum einen die Weglänge erhöht als auch die Querschnittsfläche verringert wird. Eine Verringerung der Querschnittsfläche läßt sich z.B. auch durch die Verwendung möglichst dünner Ösen (4, 7) erreichen.

Unter Umständen kann an dem Befestigungsteil (8) aus der Formgedächtnislegierung eine zusätzliche elektrische Heizeinrichtung angebracht sein.

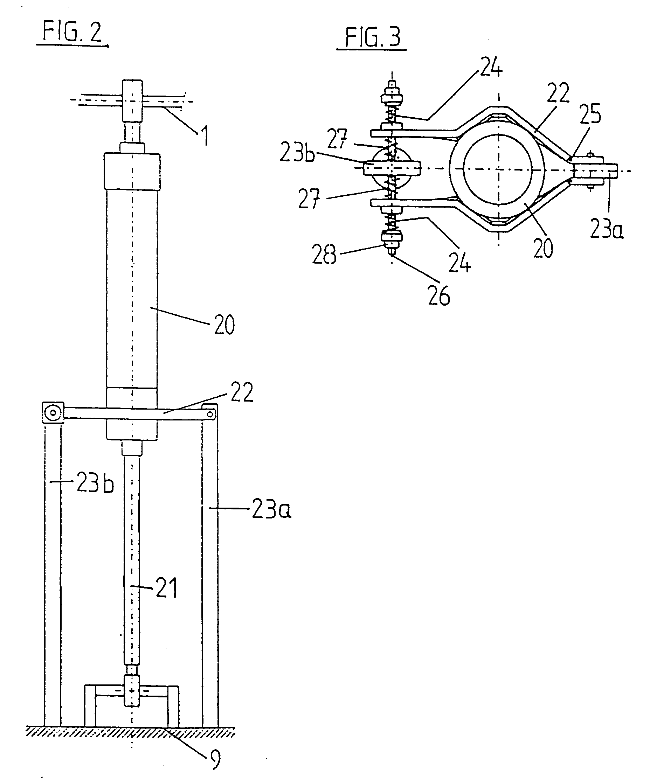

**Figur 2** zeigt in Seitenansicht eine weitere Vorrichtung zur Halterung eines Speicherbehälters (1) in einem Satelliten. Sie besteht aus zwei miteinander verbundenen, koaxial hintereinanderliegenden Streben (20, 21), von denen eine mechanisch stärker belastbare Strebe (20) am Speicherbehälter (1) und eine mechanisch weniger stark belastbare Strebe (21) am Objekt (9), also Satelliten, befestigt ist. Das speicherbehälterferne Ende der stärker belastbaren Strebe (20) ist von einem Spreizrahmen (22) eingefaßt, der mit einem am Objekt (9) befestigten Metallgestell (23a, 23b) verbunden ist. Der Spreizrahmen (22) steht mit einem Öffnungs-/Schließelement (24) aus einer Formgedächtnislegierung in Wirkverbindung.

Die Art dieser Wirkverbindung zeigt **Figur 3**. In ihr ist ein Querschnitt durch die Halterung oberhalb des Spreizrahmens (22), also in Richtung Objekt (9) blickend, dargestellt. Der Spreizrahmen (22) ist auf der einen Seite an einer der Streben (23a) des Metallgestells fest gelagert. Um ein Spreizen des Rahmens (22) zu ermöglichen, ist er auf dieser Seite mit Scharnieren (25) versehen. Auf der gegenüberliegenden Seite ist der Rahmen (22) über einen Bolzen (26) mit der Strebe (23b) des Metallgestells verbunden. Zwischen der Strebe (23b) und dem Rahmen (22) sind Stahlfedern (27) und zwischen dem Rahmen (22) und an den Enden des Bolzens (26) sitzenden Schrauben (28) Federn aus der Formgedächtnislegierung (24) angebracht.

Die Federkraft der Federn aus der Formgedächtnislegierung (24) ist bei Umgebungstemperaturen, wie sie auf der Erde herrschen, größer als die Federkraft der Stahlfedern (27). Während der Start- bzw. Beschleunigungsphase wird der Rahmen (22) somit zusammengedrückt und umfaßt das speicherbehälterferne Ende der stärker belastbaren Strebe (20). Aus diesem Grund ist in das speicherbehälterferne Ende der stärker belastbaren Strebe (20) auf Höhe des Rahmens (22) eine Vertiefung gefräst, in welche der Rahmen (22) eingreift. Nach Beendigung der Start- bzw. Beschleunigungsphase ändert sich die Federkraft der Federn aus der Formgedächtnislegierung (24), wodurch sich der Spreizrahmen (22) geringfügig öffnet und somit die stärker belastbare Strebe (20) "freigegeben" wird. Die auftretenden Kräfte werden im Gegensatz zu der Start- bzw. Beschleunigungsphase, während der sie über die stärker belastbare Strebe (20) und den Rahmen aufgenommen wurden, nunmehr über die stärker belastbare (20) und die weniger stark belastbare Strebe (21) aufgefangen. Durch den Wegfall des Wärmeflusses über den Spreizrahmen (22) und den Streben (23a, 23b) verringert sich der Wärmefluß entsprechend dem Wärmewiderstand der Strebe (21).

Es ist für den Fachmann selbstverständlich, daß neben den, in den Figuren 1 bis 3 erläuterten Ausführungsbeispielen der Erfindung, weitere Modifikationen denkbar sind.

## Patentansprüche

1. Vorrichtung zur Halterung eines Speicherbehälters (1) durch Zugspannung innerhalb eines Objekts (9), insbesondere eines beweglichen Objekts (9), vorzugsweise eines Satelliten, Flugzeugs oder Kraftfahrzeugs, wobei der Speicherbehälter(1) der Lagerung von flüssigen oder gasförmigen Fluiden, deren Temperatur mindestens eine Differenz von 10°C, insbesondere 30°C, vorzugsweise 50°C zu der Außentemperatur des Objekts aufweist, dient, wobei die Halterung ein Formteil(8) enthält, das bei vergleichsweise hohen mechanischen Belastungen, insbesondere während des Starts des Flugzeugs bzw. Satelliten oder des Fahrbetriebs des Kraftfahrzeugs, zu einer Erhöhung und bei vergleichsweise geringen mechanischen Belastungen, insbesondere während des Flugbetriebs des Flugzeugs bzw. Satelliten oder des Standbetriebs des Kraftfahrzeugs, zu einer Verringerung der Zugspannung führt, **dadurch gekennzeichnet**, daß das Formteil (8) aus einer Formgedächtnislegierung besteht.

2. Vorrichtung nach Anspruch 1, dadurch gekennzeichnet, daß die Halterung aus zwei voneinander beabstandeten, am Speicherbehälter (1) befestigten Laschen (2) besteht, die zur Aufnahme eines speicherbehälternahen Rohres (3) und eines speicherbehälterfernen Rohres (4) ausgebildet sind, wobei das speicherbehälterferne Rohr (4) mit einer Öse (5) in Eingriff steht, die mit mindestens einem weiteren Rohr (6) und einer weiteren Öse (7), sowie einem Befestigungsteil (8) aus einer Formgedächtnislegierung (Memory-Metall) mit dem Objekt (9) verbunden ist und wobei zwischen der mit dem speicherbehälterfernen Rohr (4) in Eingriff stehenden Öse (5) und dem Rohr (4) eine Kappe (10) angeordnet ist, die über ein elastisches Element (11) mit dem speicherbehälternahen Rohr (3) verbunden ist.

3. Vorrichtung nach Anspruch 1, dadurch gekennzeichnet, daß die Halterung aus zwei miteinander verbundenden, koaxial hintereinanderliegenden Streben (20, 21) besteht, von denen eine mechanisch stärker belastbare Strebe (20) am Speicherbehälter (1) und eine mechanisch weniger stark belastbare Strebe (21) am Objekt (9) befestigt ist, wobei das speicherbehälterferne Ende der starker belastbaren Strebe (20) von einem Spreizrahmen (22) eingefaßt ist, der mit einen am Objekt (9) befestigten Metallgestell (23a, 23b) verbunden ist, wobei der Spreizrahmen (22) mit einem Öffnungs-/Schließelement (24) aus einer Formgedächtnislegierung (Memory-Metall) in Wirkverbindung steht.

4. Vorrichtung nach Anspruch 1 bis 3, dadurch gekennzeichnet, daß an dem Teil (8), das aus einer Formgedächtnislegierung besteht, eine elektrische Heizeinrichtung angebracht ist.

5. Vorrichtung nach Anspruch 1 bis 3, dadurch gekennzeichnet, daß unmittelbar benachbart zu dem Teil, das aus einer Formgedächtnislegierung besteht, eine elektrische Heizeinrichtung angebracht ist.

## Claims

1. Device for supporting a storage vessel (1) by tensile stress within an object (9), especially a movable object (9) and preferably a satellite, aircraft or motor vehicle, the storage vessel (1) serving to store liquid or gaseous fluids whose temperature difference relative to the external temperature of the object is at least 10°C, especially 30°C and preferably 50°C, the support containing a moulding (8) which causes the tensile stress to increase under comparatively high mechanical loads, especially while the aircraft is taking off, the satellite is being launched or the motor vehicle is in motion, and causing the tensile stress to diminish under comparatively low mechanical loads, especially while the aircraft is cruising, the satellite is in orbit or the motor vehicle is stationary, characterized in that the moulding (8) consists of a shape-memory alloy.

2. Device according to Claim 1, characterized in that the support comprises two mutually spaced shackles (2) which are fastened to the storage vessel (1) and are configured to receive a pipe (3) close to the storage vessel and a pipe (4) remote from the storage vessel, the pipe (4) remote from the storage vessel engaging with an eyelet (5), which is connected to at least one further pipe (6) and a further eyelet (7) and to an attachment part (8), made from a shape-memory alloy (memory metal), attached to the object (9), and a cap (10) being disposed between the eyelet (5) engaging with the pipe (4) remote from the storage vessel and the pipe (4), which cap is connected by an elastic element (11) to the pipe (3) close to the storage vessel.

3. Device according to Claim 1, characterized in that the support comprises two interconnected struts (20, 21) lying coaxially one behind the other, of which a strut (20) having the greater mechanical load-bearing capacity is attached to the storage vessel (1) and a strut (21) having the lesser mechanical load-bearing capacity is attached to the object (9), that end of the strut (20) having the greater mechanical load-bearing capacity which is remote from the storage vessel being encased by an expanding frame (22), which is connected to a metal stand (23a, 23b) attached to the object (9), the expanding frame (22) being actively connected to an opening/closing element (24) made from a shape-memory alloy (memory metal).

4. Device according to Claims 1 to 3, characterized in that an electrical heating device is fitted to the part (8) consisting of a shape-memory alloy.

5. Device according to Claims 1 to 3, characterized in that an electrical heating device is fitted directly adjacent to the part consisting of a shape-memory alloy.

## Revendications

1. Dispositif de support d'un réceptacle de stockage (1) par contrainte de traction à l'intérieur d'un objet (9), en particulier d'un objet mobile (9), de préférence d'un satellite, d'un avion ou d'un véhicule, dans lequel le réceptacle de stockage (1) sert au stockage de fluides liquides ou gazeux, dont la température présente au moins une différence de 10°C, en particulier de 30°C, de préférence de 50°C avec la température extérieure de l'objet, dans lequel le support comprend une pièce de forme (8), qui conduit à une augmentation de la contrainte de traction lors de sollicitations mécaniques relativement élevées, en particulier pendant le démarrage de l'avion respectivement du satellite ou la marche du véhicule, et à une diminution de la contrainte de traction lors de sollicitations mécaniques relativement faibles, en particulier pendant le vol de l'avion respectivement du satellite ou l'arrêt du véhicule, caractérisé en ce que la pièce de forme (8) se compose d'un alliage à mémoire de forme.

2. Dispositif suivant la revendication 1, caractérisé en ce que le support se compose de deux pattes (2) espacées l'une de l'autre, fixées au réceptacle de stockage (1), qui sont profilées pour la pose d'un tube (3) proche du réceptacle de stockage et d'un tube (4) éloigné du réceptacle de stockage, dans lequel le tube (4) éloigné du réceptacle de stockage est en prise avec un oeillet (5), qui est relié à l'objet (9) par au moins un autre tube (6) et un autre oeillet (7) ainsi qu'une pièce de fixation (8) en un alliage à mémoire de forme et dans lequel est disposé, entre l'oeillet (5) se trouvant en prise avec le tube (4) éloigné du réceptacle de stockage et le tube (4), un capuchon (10) qui est relié au tube (3) proche du réceptacle de stockage par un élément élastique (11).

3. Dispositif suivant la revendication 1, caractérisé en ce que le support se compose de deux tirants (20, 21) reliés l'un à l'autre, disposés coaxialement l'un derrière l'autre, parmi lesquels un tirant (20) pouvant être mécaniquement sollicité plus fortement est fixé au réceptacle de stockage (1) et un tirant (21) pouvant être mécaniquement sollicité moins fortement est fixé à l'objet (9), l'extrémité éloignée du réceptacle de stockage du tirant (20) pouvant être sollicité plus fortement étant entourée par un cadre expansible (22), qui est relié à un châssis métallique (23a, 23b) fixé à l'objet (9), le cadre expansible (22) étant en relation active avec un élément d'ouverture/fermeture (24) en un alliage à mémoire de forme.

4. Dispositif suivant la revendication 1 à 3, caractérisé en ce qu'un dispositif de chauffage électrique est monté sur la pièce (8), qui se compose d'un alliage à mémoire de forme.

5. Dispositif suivant la revendication 1 à 3, caractérisé en ce qu'un dispositif de chauffage électrique est monté à proximité immédiate de la pièce, qui se compose d'un alliage à mémoire de forme.
